(19) **Europäisches Patentamt**

**European Patent Office**

**Office européen des brevets**

(11) **EP 1 617 565 A1**

(12) **EUROPEAN PATENT APPLICATION**

(43) Date of publication:
**18.01.2006 Bulletin 2006/03**

(51) Int Cl.:
*H04B 1/707* (2006.01)   *H04B 7/08* (2006.01)

(21) Application number: **05015359.2**

(22) Date of filing: **14.07.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **16.07.2004 JP 2004209505**

(71) Applicant: **NEC CORPORATION**
**Minato-ku,**
**Tokyo 108-8001 (JP)**

(72) Inventors:
 • **Oura, Satoshi,**
  **NEC Corporation**
  **Minato-ku**
  **Tokyo 108-8001 (JP)**
 • **Maruta, Yasushi,**
  **NEC Corporation**
  **Minato-ku**
  **Tokyo 108-8001 (JP)**

(74) Representative: **Vossius & Partner**
**Siebertstrasse 4**
**81675 München (DE)**

(54) **Detection of synchronization timing in CDMA receiving apparatus**

(57)   In a CDMA receiving apparatus according to the present invention, a delay spread calculation unit calculates a delay spread based on timings and levels of paths equal to or higher than a path level threshold, and a same-path detection time range calculation unit calculates a same-path detection time range in accordance with the delay spread. A finger-assigned path selector unit selects finger-assigned paths from paths equal to or higher than the path level threshold starting in order from the one having the highest path, and excludes paths within the same-path detection time range centered at each selected path, from candidates for finger-assigned paths, from the next selection onward. Then, a demodulation processing unit demodulates a received signal using the path timings of the finger-assigned paths as synchronization timings.

Fig. 3

**Description**

The present invention relates to a CDMA (Code Division Multiple Access) receiving apparatus, and a method of detecting a synchronization timing in the CDMA receiving apparatus.

A CDMA receiving apparatus in accordance with the CDMA communication standard calculates a delay profile indicative of a relative power value distribution in a time direction based on a correlation value of a received signal to a known code sequence, selects a synchronization timing of the received signal by detecting a peak on the calculated delay profile as a path, and demodulates the received signal using the selected synchronization timing (see, for example, JP-A-10-336072 and JP-A-2003-78448 which are hereinafter called "Documents 1, 2" respectively).

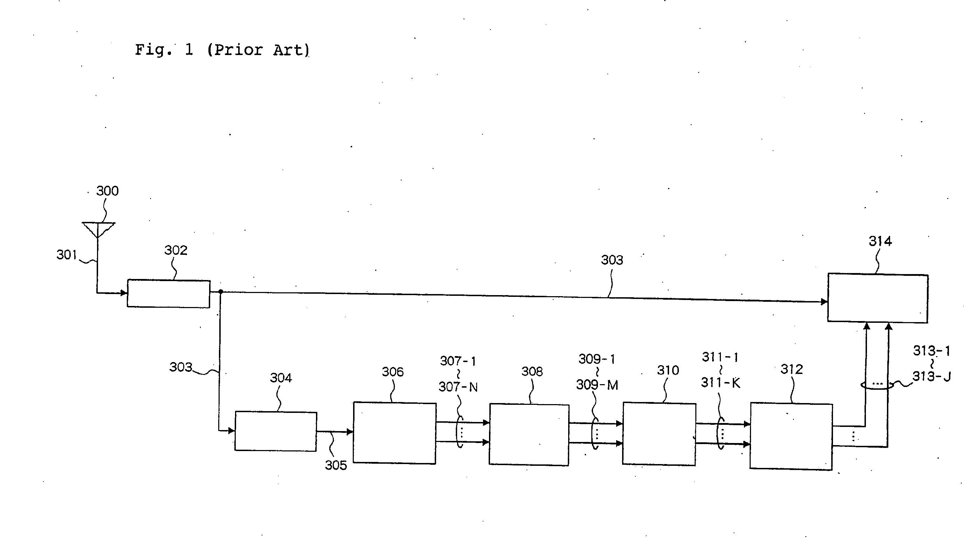

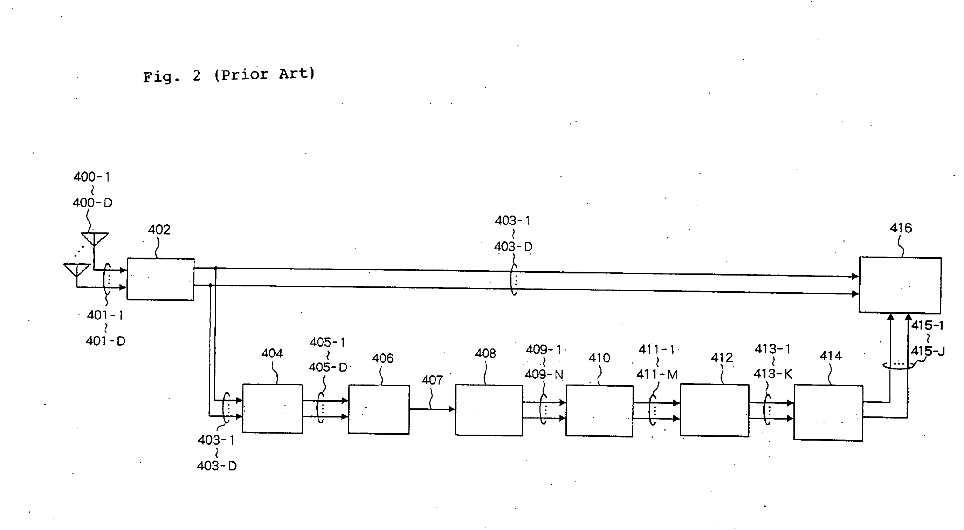

In the following, the configuration of a conventional CDMA receiving apparatus of the type mentioned above will be described in detail with reference to Figs. 1 and 2.

A CDMA receiving apparatus illustrated in Fig. 1 is a CDMA receiving apparatus disclosed in Document 2. This CDMA receiving apparatus comprises antenna 300, radio receiver unit 302, correlated power calculation unit 304, path detector unit 306, path level thresholding unit 308, finger-assigned path selector unit 310, finger assignment unit 312, and demodulation processing unit 314.

Radio receiver unit 302 converts analog radio signal 301 received by antenna 300 to digital baseband signal 303.

Correlated power calculator 304 calculates a correlated value of digital baseband signal 303, and further calculates delay profile 305 by converting the correlated value to a power value.

Path detector unit 306 detects N peaks on delay profile 305 as paths, and generates timing/level information 307-1 - 307-N indicative of a path timing and a path level associated with each of the N detected paths.

Path level thresholding unit 308 determines whether or not each of the N detected paths is equal to or higher than a path level threshold, selects M paths which are equal to or higher than the path level threshold, and generates M pieces of path timing /level information 309-1 - 309-M.

Finger-assigned path selector unit 310 selects paths assigned to fingers (finger-assigned paths) from M candidate paths equal to or higher than the path level threshold starting in order from the path having the highest level, and excludes paths within the same-path detection time range previously set centered at each selected path, from candidates for finger-assigned paths, from the next selections onward. Also, finger-assigned path selector unit 310 generates K pieces of timing/level information 311-1 - 311-K on K finger-assigned paths selected by the foregoing processing.

Finger assignment unit 312 assigns the path timings of the K finger-assigned paths to J fingers as synchronization timings, and generates J pieces of path timing information 313-1 - 313-J.

Demodulation processing unit 314 performs demodulation processing such as despreading, RAKE combining, decoding and the like using the synchronization timings assigned to the J fingers by finger assignment unit 312.

In the CDMA receiving apparatus illustrated in Fig. 1, path level thresholding unit 308 selects detected paths which have a level equal to or higher than the path level threshold on delay profile 305, finger-assigned path selector unit 310 selects the detected paths equal to or higher than the path level threshold as finger-assigned paths, and demodulation processing unit 314 demodulates a received signal using path timings of the finger-assigned paths as synchronization timings. The same-path detection time range has been previously set in finger-assigned path selector unit 310. Therefore, finger-assigned path selector unit 310 regards a path falling within the previously set same-path detection time range and having a level equal to or higher than the path level threshold as the same path as a previously selected finger-assigned path, and excludes such a path from candidates for finger-assigned paths from the next selection onward.

Communication signals in the CDMA communication standard are not correlated to each other if their path timings are spaced apart by 1 chip or more. For this reason, the same-path detection time range is generally set in a range of $\pm 0.5$ chips centered at the path timing of a detected path.

Accordingly, finger-assigned path selector 310 regards paths found within $\pm 0.5$ chips from a previously selected finger-assigned path as the same paths as the finger-assigned path, and excludes those paths from candidates for finger-assigned paths from the next selection onward irrespective of whatever path level they have. In this way, finger-assigned path selector unit 310 can be prevented from erroneously detecting a path found within $\pm 0.5$ chips centered at the path timing of a finger-assigned path as another finger-assigned path. On the other hand, however, if paths arrive in a concentrated manner at the same time, a large number of paths cannot be detected as finger-assigned paths.

An article "CDMA Path-search Method Using a Combined Delay Profile of Diversity Antennas" by Aoyama, Yoshida, and Ushirokawa (The Institute of Electronics, Information and Communication Engineers, Technical Report, RCS99-67, 1999) shows that many paths arrive in a concentrated manner in an interval of approximately two chips under radio wave propagation environments in urban areas. When the same-path detection time range is set to $\pm 0.5$ chips under in environments, a large number of paths cannot be detected.

Therefore, a uniquely set same-path detection time range can cause a lower path detectability factor depending on certain radio wave propagation environments, thus leading to a lower demodulation accuracy in the RAKE combining, and a degraded reception quality.

On the other hand, a CDMA receiving apparatus illustrated in Fig. 2 employs an array antenna composed of a plurality of antenna elements. This CDMA receiving apparatus calculates not only a delay profile indicative of a correlated power level distribution in the time direction but also an angle profile indicative of a correlated power level distribution in an angle direction to set a same-path detection time range and a same-path detection angle range in the time direction and angle direction, respectively. This CDMA receiving apparatus comprises a plurality of antennas 400-1 - 400D, radio receiver unit 402, correlated value calculation unit 404, beam former unit 406, path detector unit 408, path level thresholding unit 410, finger-assigned path selector unit 412, finger assignment unit 414, and demodulation processing unit 416.

Radio receiver unit 402 converts analog radio signals 401-1 - 401-D received respectively by antennas 400-1 - 400-D to digital baseband signals 403-1 - 403-D, respectively.

Correlated value calculation unit 404 calculates correlated values for digital baseband signals 403-1 - 403-D, and generates correlated values 405-1 - 405-D.

Beam former unit 406 multiplies correlated values 405-1 - 405-D by an antenna weight, calculates a sum of the products over antennas, and further converts the resulting sum to power values to calculate two-dimensional profile 407 which is a combination of the delay profile with the angle profile.

Path detector unit 408 detects N peaks on two-dimensional profile 407 as paths, and generates timing/ direction of arrival/ level information 409-1 - 409-N indicative of a path timing, direction of arrival, and a path level of each of the N detected paths.

Path level thresholding unit 410 determines whether or not N detected paths are each equal to or higher than a path level threshold, selects M paths equal to or higher than the path level threshold, and generates M pieces of path timing/ direction of arrival/ level information 411-1 -411-M.

Finger-assigned path selector unit 412 selects finger-assigned paths, from M candidate paths equal to or higher than the path level threshold, starting in order from the path having the highest level, and excludes paths within a previously set same-path detection time range and same-path detection angle range centered at each selected path, from candidates for finger-assigned paths, from the next selection onward. Also, finger-assigned path selector unit 412 generates timing/ direction of arrival/ level information 413-1 - 413-K on K finger-assigned paths selected by the foregoing processing.

Finger assignment unit 414 assigns the path timings and directions of arrival of the K finger-assigned paths to J fingers as synchronization timings and arrival directions, respectively, and generates J pieces of path timing/direction of arrival information 415-1 - 415-J.

Demodulation processing unit 416 performs demodulation processing on digital baseband signals 403-1 - 403-D using the synchronization timings and directions of arrival assigned to the J fingers, including despreading, beam forming, RAKE combining, decoding, and the like.

In the CDMA receiving apparatus illustrated in Fig. 2, beam former unit 406 can generate an angle profile in the angle direction in addition to the delay profile in the time direction by multiplying correlated values 405-1 - 405-D by antenna weights and calculates a sum of the products over antennas. Also, path detector unit 408 can estimate the arrival direction of the received signal in addition to the synchronization timing of the received signal by detecting paths from two-dimensional profile 407.

However, since the same-path detection time range in the time direction is uniquely set on the delay profile, the demodulation accuracy becomes lower in the RAKE combining depending on some radio wave propagation environments, resulting in a degraded reception quality, as is the case with the CDMA receiving apparatus illustrated in Fig. 1. Also, the same-path detection angle range in the angle direction is uniquely set on the angle profile, causing a deterioration in path detection rate, a failure in accurately finding the direction of arrival of a received signal, and a degraded reception quality.

As described above, conventional CDMA receiving apparatuses experience the problem of degraded reception quality due to the same-path detection time range which is uniquely set irrespective of the radio wave propagation environment.

It is therefore an object of the present invention to provide a CDMA receiving apparatus which is capable of maintaining a reception quality irrespective of a radio wave propagation environment, and to provide a method of detecting synchronization timing in the CDMA receiving apparatus.

According to a first aspect of the present invention, a CDMA receiving apparatus includes an antenna, calculating means, path detecting means, path level thresholding means, delay spread calculating means, same-path detection time range calculating means, finger-assigned path selecting means, and demodulation processing means.

The calculating means calculates a delay spread indicative of a correlated power value distribution in a time direction of a signal received by the antenna. The path detecting means detects peaks on the delay profile as paths. The path level thresholding means determines whether or not each of the detected paths has a path level equal to or higher than a path level threshold.

The delay spread calculating means calculates a delay spread based on path timings and path levels of paths which are determined to have a path level equal to or higher than the path level threshold. The same-path detection time range calculating means calculates a same-path detection time range in accordance with the delay spread.

The finger-assigned path selecting means selects finger-assigned paths from those paths determined to have a path level equal to or higher than the path level threshold starting in order from the one having the highest level, and excludes paths within the same-path detection time range centered at each selected path, from candidates for finger-assigned paths, from the next selection onward.

The demodulation processing means demodulates the received signal using the path timings of the finger-assigned paths as synchronization timings.

According to the first aspect, a same-path detection time range is selected in accordance with a particular radio wave propagation environment by calculating a delay spread based on path timings and path levels of paths, and paths are selected for assignment to fingers using the same-path detection time range. It is therefore possible to improve the accuracy of detecting synchronization timings for a received signal and to improve the reception quality of the CDMA receiving apparatus.

According to a second aspect of the present invention, a CDMA receiving apparatus includes a plurality of antennas, calculating means, path detecting means, path level thresholding means, delay spread calculating means, same-path detection time range calculating means, angle spread calculating means, same-path detection angle range calculating means, finger-assigned path selecting means, and demodulation processing means.

The calculating means calculates a delay profile indicative of a correlated power value distribution in a time direction of the signals received by the plurality of antennas and an angle profile indicative of a correlated power value distribution in an angle direction of the received signals, and combines the delay profile with the angle profile to calculate a two-dimensional profile. The path detecting means detects peaks on the two-dimensional profile as paths. The path level thresholding means determines whether or not each of the detected paths has a path level equal to or higher than a path level threshold.

The delay spread calculating means calculates a delay spread based on path timings and path levels of paths which are determined to have a level equal to or higher than the path level threshold. The same-path detection time range calculating means calculates a same-path detection time range in accordance with the delay spread.

The angle spread calculating means calculates an angle spread based on directions of arrival and path levels of the paths determined to have a level equal to or higher than the path level threshold. The same-path detection angle range calculating means calculates a same-path detection angle range in accordance with the angle spread.

The finger-assigned path selecting means selects finger-assigned paths from paths determined to have a level equal to or higher than the path level threshold starting in order from the path having the highest level, and excludes paths within the same-path detection time range and the same-path detection angle range centered at each selected path, from candidates for finger-assigned paths, from the next selection onward.

The demodulation processing means demodulates the received signals by using the path timings of the finger-assigned paths as the synchronization timings, and by using the directions of arrival of the finger-assigned paths as directions of arrival of the received signals.

According to the second aspect, a delay spread is calculated based on path timings and path levels of paths, and an angle spread is calculated based on directions of arrival and path levels of the paths to select a same-path detection time range and a same-path detection angle range in accordance with a particular radio wave propagation environment, and paths are selected for assignment to fingers using the same-path detection time range and same-path detection angle range. It is therefore possible to improve the accuracy of detecting synchronization timings for received signals, to accurately find directions of arrival of the received signals, and to improve the reception quality of the CDMA receiving apparatus.

The above and other objects, features and advantages of the present invention will become apparent from the following description with reference to the accompanying drawings which illustrate examples of the present invention.

Fig. 1 is a block diagram illustrating an exemplary configuration of a conventional CDMA receiving apparatus;
Fig. 2 is a block diagram illustrating another exemplary configuration of a conventional CDMA receiving apparatus;
Fig. 3 is a block diagram illustrating the configuration of a CDMA receiving apparatus according to a first embodiment of the present invention;
Fig. 4 is a graph showing a first path detection example which is illustrative of paths detected by the CDMA receiving apparatus illustrated in Fig. 3;
Fig. 5 is a graph showing a second path detection example which is illustrative of a path detected by the CDMA receiving apparatus illustrated in Fig. 3;
Fig. 6 is a block diagram illustrating the configuration of a CDMA receiving apparatus according to a second embodiment of the present invention;
Fig. 7 is a graph showing a third path detection example which is illustrative of a path detected by the CDMA receiving apparatus illustrated in Fig. 6; and

Fig. 8 is a graph showing a fourth path detection example which is illustrative of another example of a path detected by the CDMA receiving apparatus illustrated in Fig. 6.

First Embodiment

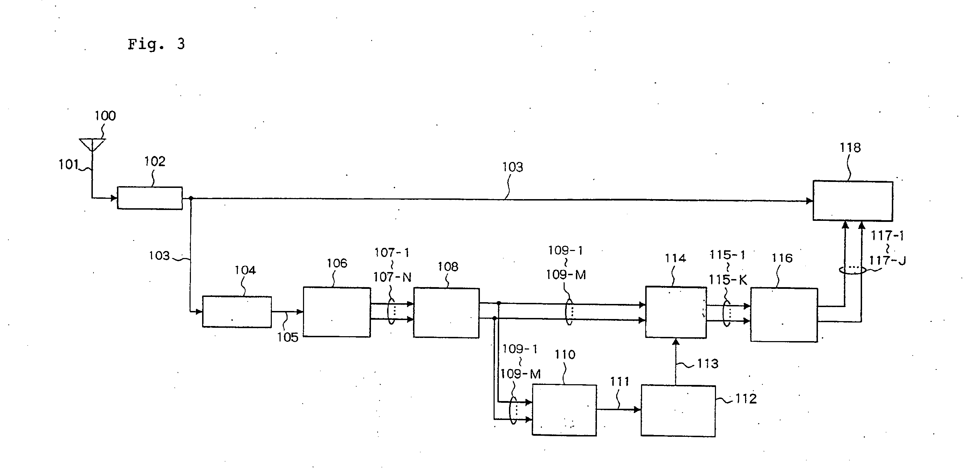

Referring to Fig. 3, a CDMA receiving apparatus of a first embodiment comprises antenna 100, radio receiver unit 102, correlated power calculation unit 104, path detector unit 106, path level thresholding unit 108, delay spread calculation unit 110, same-path detection time range calculation unit 112, finger-assigned path selector unit 114, finger assignment unit 116, and demodulation processing unit 118.

Radio receiver unit 102 converts analog radio signal 101 received by antenna 100 to digital baseband signal 103.

Correlated power calculation unit 104 calculates a correlated value of digital baseband signal 103, and converts the correlated value to a power value to generate delay profile 105.

Path detector unit 106 detects N peaks on delay profile 105 as paths, and generates timing/level information 107-1 - 107-N each indicative of a path timing and a path level associated with each of the N detected paths.

Path level thresholding unit 108 determines whether or not each of the N detected paths is equal to or higher than a path level threshold, selects M paths equal to or higher than the path level threshold, and generates M pieces of path timing/level information 109-1 - 109-M.

Delay spread calculation unit 110 calculates delay spread 111 based on the path timings and path levels of the M paths which are equal to or higher than the path level threshold.

Same-path detection time range calculation unit 112 calculates same-path detection time range 113 in accordance with delay spread 111.

Finger-assigned path selector unit 114 selects finger-assigned paths from M candidate paths equal to or higher than the path level threshold starting in order from the path having the highest level, and simultaneously excludes paths within same-path detection time range 113 centered at each selected path, from candidates for finger-assigned paths, from the next selection onward. Also, finger-assigned path selector unit 114 generates K pieces of timing/level information 115-1 - 115-K on K finger-assigned paths selected by the foregoing processing.

Finger assignment unit 116 assigns the path timings of the K finger-assigned paths to J fingers as synchronization timings, and generates J pieces of path timing information 117-1 - 117-J.

Demodulation processing unit 118 demodulates digital baseband signal 103 by performing despreading, RAKE combining, decoding and the like using the synchronization timings assigned to the J fingers by finger assignment unit 116.

Now, characteristic features of this embodiment will be described in detail.

Delay spread calculation unit 110 calculates delay spread 111 based on path timing/level information 109-1 - 109-M on the M paths, whose path levels, as determined by path level thresholding unit 108, are equal to or higher than the path level threshold. Delay spread 111 is an index indicative of a temporal dispersion of paths on delay profile 105 which is calculated based on the timing and level of each path, and is calculated by the following Equation 1:

$$\sigma_\tau = \sqrt{\frac{1}{\sum\limits_{i=1}^{N} P_i} \cdot \sum\limits_{i=1}^{N} (\tau_i - \tau_{ave})^2 P_i} \qquad (Eq.1)$$

where i represents a path number; N the number of paths; $P_i$ the path level of an i-th path; $\tau_i$ a path timing of the i-th path; and $\tau_{ave}$ an average path timing which is calculated by the following Equation 2:

$$\tau_{ave} = \frac{1}{\sum\limits_{i=1}^{N} P_i} \cdot \sum\limits_{i=1}^{N} \tau_i P_i \qquad (Eq.2)$$

In this way, delay spread 111 calculated by delay spread calculation unit 110 is large when paths having similar levels are positioned apart from one another, and is small when paths having similar levels are concentrated.

Same-path detection time range calculation unit 112 determines same-path detection time range 113 corresponding to delay spread 111 calculated by delay spread calculation unit 110 based on a previously set reference table in which the delay spread corresponds to the same-path detection time range, and applies determined same-path detection time range 113 to finger-assigned path selector unit 114. In this event, since paths are assumed to arrive in a dispersive manner when delay spread 111 is large, same-path detection time range calculation unit 112 selects large same-path detection time range 113. In this way, the finger-assigned path selector unit 114 subsequently can be prevented from regarding a path close to a previously selected finger-assigned path as another path and erroneously detecting this path as another finger-assigned path. On the other hand, since paths are assumed to arrive concentrated together when delay spread 111 is small, same-path detection time range calculation unit 112 selects small same-path detection time range 113. In this way, finger-assigned path selector unit 114 subsequently can be prevented from regarding a path close to a previously selected finger-assigned path as a same path and not detecting this path as another finger-assigned path.

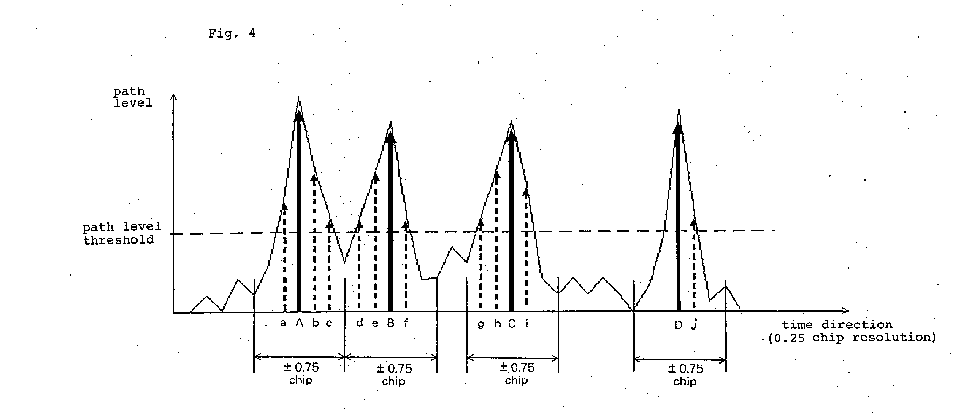

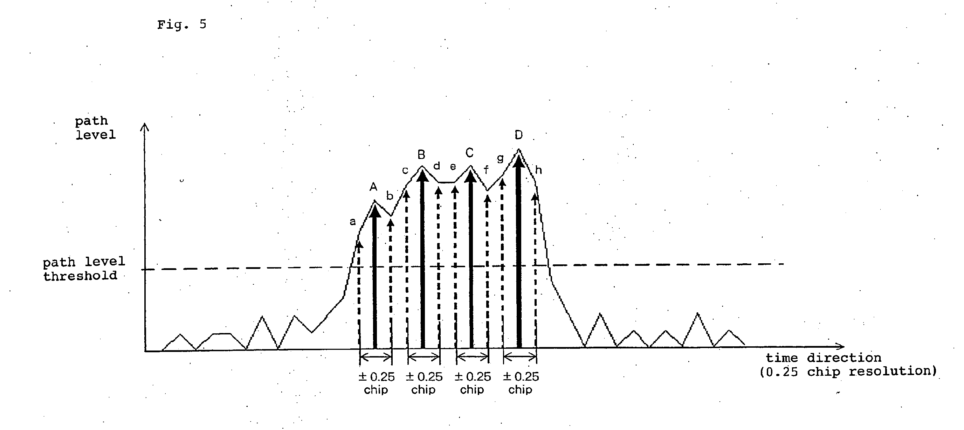

Consider, for example, two examples of detected paths represented by delay profiles as shown in Figs. 4 and 5, respectively. In the following, the example of detected paths shown in Fig. 4 is called the "first path detection example," and the example of detected paths shown in Fig. 5 is called the "second path detection example." A comparison of the two path detection examples reveals that a plurality of paths at similar levels arrive in a dispersive manner over time in the first path detection example, whereas a plurality of paths arrive largely concentrated together within the small time range in the second path detection example. Table 1 shows a path timing and a path level value of each path in the first path detection example, and Table 2 shows a path timing and a path level value of each path in the second path detection example.

Table 1

| Path Number | Path Name | Path Timing (chip) | Path Level |
|---|---|---|---|
| 1 | Path A | 2.00 | 14 |
| 2 | Path B | 3.50 | 12 |
| 3 | Path C | 5.50 | 12 |
| 4 | Path D | 8.25 | 13 |
| 5 | Path a | 1.75 | 7 |
| 6 | Path b | 2.25 | 9 |
| 7 | Path c | 2.50 | 6 |
| 8 | Path d | 3.00 | 6 |
| 9 | Path e | 3.25 | 9 |
| 10 | Path f | 3.75 | 6 |
| 11 | Path g | 5.00 | 6 |
| 12 | Path h | 5.25 | 9 |
| 13 | Path i | 5.75 | 8 |
| 14 | Path j | 8.50 | 6 |

Table 2

| Path Number | Path Name | Path Timing (chip) | Path Level |
|---|---|---|---|
| 1 | Path A | 3.50 | 9 |
| 2 | Path B | 4.25 | 11 |
| 3 | Path C | 5.00 | 11 |
| 4 | Path D | 5.75 | 12 |
| 5 | Path a | 3.25 | 7 |
| 6 | Path b | 3.75 | 8 |
| 7 | Path c | 4.00 | 10 |
| 8 | Path d | 4.50 | 10 |

Table continued

| Path Number | Path Name | Path Timing (chip) | Path Level |
|---|---|---|---|
| 9 | Path e | 4.75 | 10 |
| 10 | Path f | 5.25 | 9 |
| 11 | Path g | 5.50 | 10 |
| 12 | Path h | 6.00 | 10 |

In the first path detection example, paths A - D and paths a - j have levels equal to or higher than the path level threshold. Thus, delay spread calculation unit 110 calculates delay spread 111 using the path timings and path levels of these paths. Specifically, delay spread calculation unit 110 substitutes the values in Table 1 for the values in Equation 1 to calculate delay spread 111 of the first path detection example to be 2.13 chips. In the second path detection example, on the other hand, paths A - D and paths a - h have levels equal to or higher than the path level threshold. Thus, delay spread calculation unit 110 calculates delay spread 111 using the path timings and path levels of these paths. Specifically, delay spread calculating unit 110 substitutes the values in Table 2 for the values in Equation 1 to calculate delay spread 111 of the second path detection example to be 0.84 chips.

Same-path detection time range calculation unit 112 employs a reference table which selects 0.75 chips for same-path detection time range 113, for example, when delay spread 111 is equal to or more than one chip, and selects 0.25 chips for same-path detection time range 113 when delay spread 111 is less than one chip. When such a reference table is used, same-path detection time range calculation unit 112 selects 0.75 chips as same-path detection time range 113 for the first path detection example, and selects 0.25 chips as same-path detection time range 113 for the second path detection example.

Therefore, in the first path detection example, subsequent finger-assigned path selector unit 114 regards paths outside of a range of $\pm0.75$ chips centered at a path timing of a previously selected finger-assigned path as other paths. In the second path detection example, in turn, subsequent finger-assigned path selector unit 114 regards paths outside of a range of $\pm 0.25$ chips centered at a path timing of a previously selected finger-assigned path, as other paths.

Finger-assigned path selector unit 114 selects finger-assigned paths from those paths equal to or higher than the path level threshold starting in order from the one having the highest level, and simultaneously excludes all paths within same-path detection time range 113 centered at each selected path, from candidates for finger-assigned paths, from the next selection onward. In this event, when there are paths at the same level, finger-assigned path selector unit 114 preferentially selects the one which is earlier in path timing.

Specifically, in the first path detection example, finger-assigned path selector unit 114 first selects path A as a finger-assigned path, and simultaneously excludes paths found within a range of $\pm0.75$ chips centered at path A, from candidates for finger-assigned paths, from the next selection onward, so that paths a - c will never be selected, from the next time onward. Then, finger-assigned path selector unit 114 performs similar processing on path D. By repeating the foregoing sequence, finger-assigned path selector unit 114 selects a total of four paths A - D. In the second path detection example, in turn, finger-assigned path selector unit 114 first selects path D as a finger-assigned path, and simultaneously excludes paths found within a range of $\pm0.25$ chips centered at path D, from candidates for finger-assigned paths, from the next selection onward, so that paths g - h will never be selected from the next time onward. Then, finger-assigned path selector unit 114 performs similar processing on path B. By repeating the foregoing sequence, finger-assigned path selector unit 114 selects a total of four paths A - D.

Correspondingly, in a conventional CDMA receiving apparatus, in which the path detection time range is uniquely set, for example, to 0.25 chips when paths A - D have actually arrived in the first path detection example, path c close to path A, path d close to path B, and path g close to path C are erroneously selected as other finger-assigned paths. On the other hand, in a conventional CDMA receiving apparatus, in which path detection time range is uniquely set, for example, to 0.75 chips when paths A - D have actually arrived in the second path detection example, only paths B, D are selected as other finger-assigned paths.

In the first embodiment as described above, same-path detection time range 113 is adaptively determined with delay spread 111, and paths are selected for assignment to fingers using this same-path detection time range 113. In this way, accuracy is increased in the detection of the synchronization timing for a received signal so that the reception quality can be improved for the CDMA receiving apparatus.

In the following, the operation of the CDMA receiving apparatus according to the first embodiment will be described with reference to Fig. 3.

Analog radio signal 101 received by antenna 100 is converted to digital baseband signal 103 by radio receiver unit 102, and digital baseband signal 103 is delivered to correlated power calculation unit 104 and demodulation processing unit 118.

Correlated power calculation unit 104 multiplies digital baseband signal 103 by a known code sequence to calculate a correlated value, and further converts the correlated value to a power value to calculate delay profile 105.

Path detector unit 106 detects N peaks on delay profile 105 starting in order from the one having the highest level, and delivers timing/level information 107-1 - 107-N indicative of a path timing and a path level of each of the detected paths to path level thresholding unit 108.

Path level thresholding unit 108 selects M paths having levels equal to or higher than a previously set path level threshold from the N paths detected by path detector unit 106. The path level threshold in this event may be calculated by multiplying an average value of delay profile 105 by a previously set coefficient or by multiplying a maximum path level by a previously set coefficient equal to or less than one, but it does not herein particularly matter how the path level threshold is set.

M pieces of timing/level information 109-1 - 109-M on the M paths having levels equal to or higher than the path level threshold are delivered from path level thresholding unit 108 to delay spread calculation unit 110 and finger-assigned path selector unit 114.

Delay spread calculation unit 110 substitutes the path timings and path level values of the M paths selected by path level thresholding unit 108 for the values in Equation 1 based on timing/level information 109-1 - 109-M to calculate delay spread 111 which is then delivered to same-path detection time range calculation unit 112.

Same-path detection time range calculation unit 112 selects same-path detection time range 113 in accordance with delay spread 111 using a previously set reference table, and delivers selected same-path detection time range 113 to finger-assigned path selector unit 114.

Finger-assigned path selector unit 114 selects finger-assigned paths from the M paths selected by path level thresholding unit 108 starting in order from the one having the highest level based on timing/level information 109-1 - 109-M and same-path detection time range 113, and simultaneously regards those paths found within same-path detection time range 113 of the selected path as the same path to exclude the paths from candidates for finger-assigned paths from the next selection onward. By repeating the foregoing sequence, finger-assigned path selector unit 114 selects K paths as finger-assigned paths. Then, finger-assigned path selector unit 114 delivers K pieces of timing/level information 115-1 - 115-K on the K paths to finger assignment unit 116.

Finger assignment unit 116 assigns the K finger-assigned paths to J fingers using the path timings of the K finger-assigned paths as synchronization timings based on timing/level information 115-1 - 115-K. In this event, the fingers may be assigned by the following methods. A first method selects paths starting in order from the one having the highest level for assignment when J is less than K due to limitations and the like on the capacity of hardware associated with the CDMA receiving apparatus. A second method makes (J-K) fingers invalid such that they are not used in RAKE combining when K is less than J. A third method preferentially assigns those paths, found in a certain range of the path timing of a path that have been assigned to a finger in the preceding time, to the same finger as the preceding one. Assume however that it does not particularly matter how fingers are assigned. Then, finger assignment unit 116 delivers timing information 117-1 - 117-J on paths assigned to J fingers to demodulation processing unit 118 as synchronization timings of the received signal.

Demodulation processing unit 118 demodulates digital baseband signal 103 of the received signal by performing despreading, RAKE combining, decoding and the like using timing information 117-1 -117-J assigned to the J fingers as synchronization timings.

Second Embodiment

A CDMA receiving apparatus of a second embodiment employs array antennas compose of a plurality of antenna elements. The CDMA receiving apparatus of this embodiment calculates not only a delay profile indicative of a correlated power value distribution in the time direction but also an angle profile indicative of a correlated power value distribution in an angle direction, and calculates a same-path detection time range and a same-path detection angle range in the time and angle directions, respectively. In this way, the CDMA receiving apparatus can accurately detect a synchronization timing and an arrival direction of a received signal.

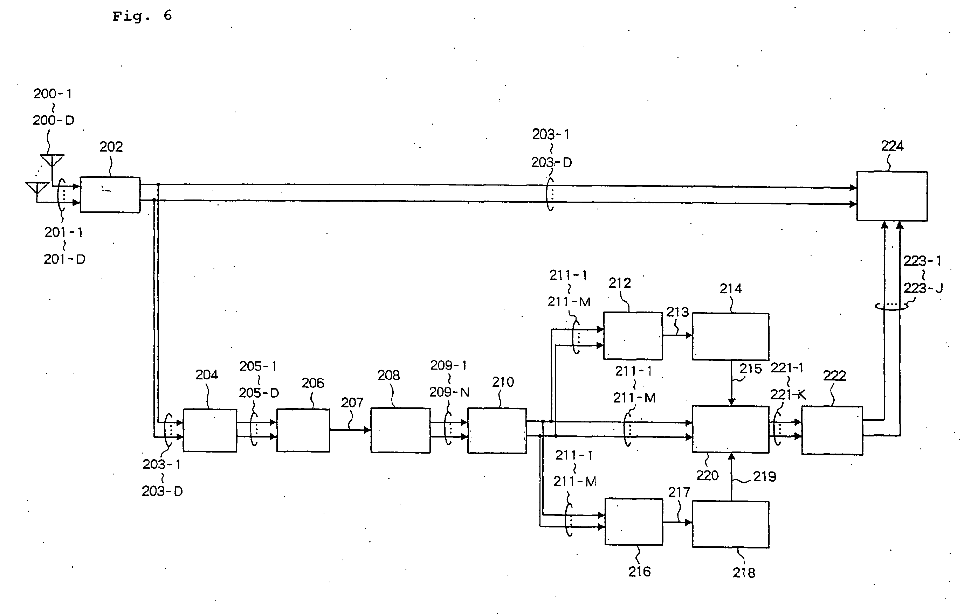

Referring to Fig. 6, the CDMA receiving apparatus of this embodiment comprises antennas 200-1 - 200-D composed of antenna elements, radio receiver unit 202, correlated value calculation unit 204, beam former unit 206, path detector unit 208, path level thresholding unit 210, delay spread calculation unit 212, same-path detection time range calculation unit 214, angle spread calculation unit 216, same-path detection angle range calculation unit 218, finger-assigned path selector unit 220, finger assignment unit 222, and demodulation processing unit 224.

Radio receiver 202 converts analog radio signals 201-1 - 201-D respectively received by antennas 200-1 - 200-D to digital baseband signals 203-1 - 203-D, respectively.

Correlated value calculation unit 204 calculates correlated values 205-1 - 205-D for digital baseband signals 203-1 - 203-D, and delivers correlated values 205-1 - 205-D.

Beam former unit 206 multiplies each of correlated values 205-1 - 205-D by antenna weights, calculates a sum of the products over antennas, and further converts the resulting sum to a power value to calculate two-dimensional profile 207 which is a combination of the delay profile and the angle profile.

Path detector unit 208 detects N peaks on two-dimensional profile 207 as paths and generates N pieces of timing/ direction of arrival/ level information 209-1 - 209-N each indicative of a path timing, a direction of arrival, and a path level of each of the N detected paths.

Path level thresholding unit 210 determines whether or not the N detected paths are equal to or higher than a path level threshold, selects M paths which are equal to or higher than the path level threshold, and generates M pieces of timing/direction of arrival/level information 211-1 - 211-M on the M paths.

Delay spread calculation unit 212 calculates delay spread 213 based on the path timings and path levels of the M paths which are equal to or higher than the path level threshold.

Same-path detection time range calculation unit 214 calculates same-path detection time range 215 in accordance with delay spread 213.

Angle spread calculation unit 216 calculates angle spread 217 based on the directions of arrival and path levels of the M paths which are equal to or higher than the path level threshold.

Same-path detection angle range calculation unit 218 calculates same-path detection angle range 219 in accordance with angle spread 217.

Finger-assigned path selector unit 220 selects finger-assigned paths, from the M paths equal to or higher than the path level threshold, starting in order from the one having the highest path, and simultaneously excludes those paths found within same-path detection time range 215 and same-path detection angle range 219 centered at each selected path, from candidates for finger-assigned paths, from the next selection onward. Then, finger-assigned path selector unit 220 generates K pieces of timing/direction of arrival/ level information 221-1 - 221-K on the K finger-assigned paths selected through the foregoing processing.

Finger assignment unit 222 assigns the path timings and directions of arrival of the K finger-assigned paths to J fingers, respectively, as synchronization timings and arrival directions, and generates J pieces of timing/direction of arrival information 223-1 - 223-J on the J paths.

Demodulation processing unit 224 demodulates digital baseband signals 203-1 - 203-D by performing despreading, beam forming, RAKE combining, decoding and the like using the synchronization timing and arrival directions assigned to the J fingers by finger assignment unit 222.

Specifically, the second embodiment differs from the first embodiment illustrated in Fig. 3 in that the former additionally includes beam former unit 206 and angle spread calculation unit 216, that the former additionally includes same-path detection angle range calculation unit 218, that antennas 200-1 - 200-D are composed of a plurality of antenna elements, and that correlated power calculation unit 104 is replaced with correlation calculation unit 204.

Now, characteristic features of the second embodiment will be described in detail. The following description will be mainly focused on the configuration associated with the calculation of same-path detection angle range 219.

Angle spread calculation unit 216 calculates angle spread 217 based on path timing/ direction of arrival/level information 211-1 - 211-M of the M paths, whose path levels, as determined by path level thresholding unit 210, are equal to or higher than the path level threshold. Angle spread 217 is an index indicative of a spatial dispersion of paths on the angle profile that is calculated based on the direction of arrival and path level of each path, and is calculated by the following Equation 3:

$$\sigma_\theta = \sqrt{\frac{1}{\sum\limits_{i=1}^{N} P_i} \cdot \sum\limits_{i=1}^{N} (\theta_i - \theta_{ave})^2 P_i} \qquad \text{(Eq.3)}$$

where i represents a path number; N the number of paths; $P_i$ the path level of an i-th path; $\theta_i$ direction of arrival of the i-th path; and $\theta_{ave}$ an average direction of arrival of paths which is calculated by the following Equation 4:

$$\theta_{ave} = \frac{1}{\sum\limits_{i=1}^{N} P_i} \cdot \sum\limits_{i=1}^{N} \theta_i P_i \qquad \text{(Eq.4)}$$

In this way, angle spread 217 calculated by angle spread calculation unit 216 is large when paths having similar levels arrive spatially apart from one another, and is small when paths arrive in a concentrated together at similar angles.

Same-path detection angle range calculation unit 218 determines same-path detection angle range 219 corresponding to angle spread 217 calculated by angle spread calculation unit 216 based on a previously set reference table in which the angle spread corresponds to the same-path detection angle range, and applies determined same-path detection angle range 219 to finger-assigned path selector unit 220. In this event, since paths are assumed to arrive spatially in a dispersive manner when angle spread 217 is large, same-path detection angle range calculation unit 218 selects large same-path detection angle range 219. In this way, finger-assigned path selector unit 220 subsequently can be prevented from regarding a path close to a previously selected finger-assigned path as another path and erroneously detecting this path as another finger-assigned path. On the other hand, since paths are assumed to arrive in concentration substantially at the same angle when angle spread 217 is small, same-path detection angle range calculation unit 218 selects small same-path detection angle range 219. In this way, subsequent finger-assigned path selector unit 220 can be prevented from regarding a path close to a previously selected finger-assigned path as a same path and not detecting this path as another finger-assigned path.

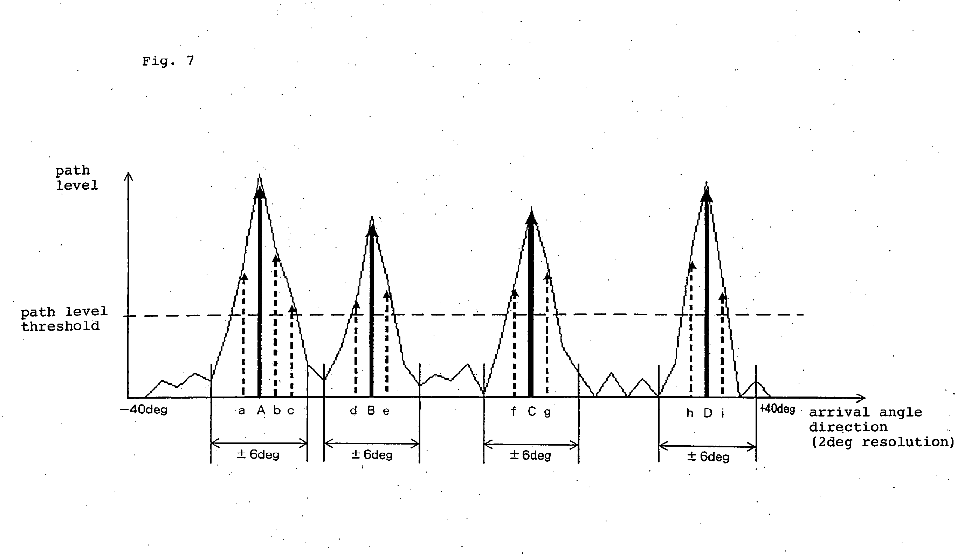

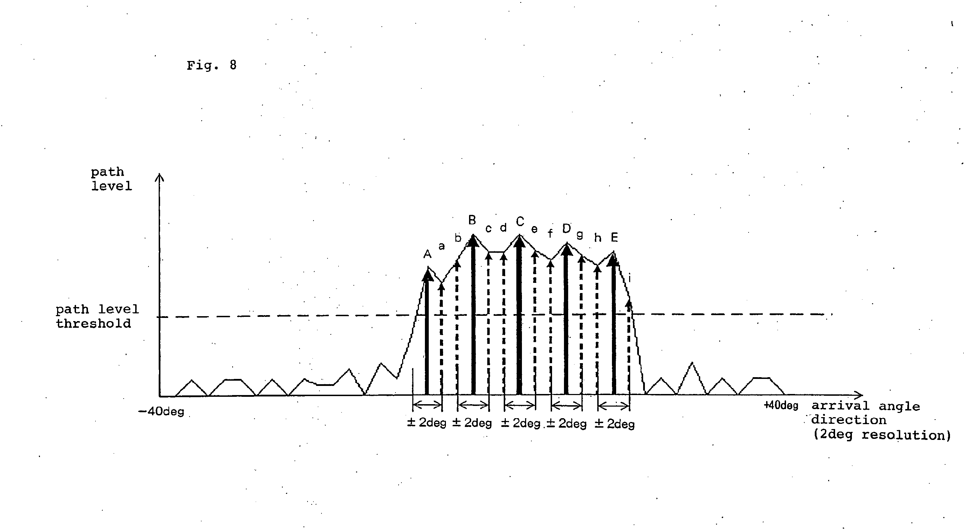

Consider, for example, two examples of detected paths represented by delay profiles as shown in Figs. 7 and 8. In the following, the example of detected paths shown in Fig. 7 is called the "third path detection example," and the example of detected paths shown in Fig. 8 is called the "fourth path detection example." A comparison of the two path detection examples reveals that a plurality of paths at similar levels arrive spatially in a dispersive manner in the third path detection example, whereas a plurality of paths arrive substantially concentrated together within the small angular range in the fourth path detection example. Table 3 shows a direction of arrival and a path level value of each path in the third path detection example, and Table 2 shows a direction of arrival and a path level value of each path in the fourth path detection example.

Table 3

| Path Number | Path Name | Direction of Arrival (deg) | Path Level |
|---|---|---|---|
| 1 | Path A | -24 | 13.5 |
| 2 | Path B | -10 | 11 |
| 3 | Path C | 10 | 11.5 |
| 4 | Path D | 32 | 13 |
| 5 | Path a | -26 | 8 |
| 6 | Path b | -22 | 9 |
| 7 | Path c | -20 | 6 |
| 8 | Path d | -12 | 6 |
| 9 | Path e | -8 | 7 |
| 10 | Path f | 8 | 7 |
| 11 | Path g | 12 | 8 |
| 12 | Path h | 30 | 8.5 |
| 13 | Path i | 34 | 7 |

Table 4

| Path Number | Path Name | Direction of Arrival (deg) | Path Level |
|---|---|---|---|
| 1 | Path A | -6 | 14 |
| 2 | Path B | 0 | 12 |
| 3 | Path C | 6 | 12 |
| 4 | Path D | 12 | 13 |
| 5 | Path E | 18 | 7 |
| 6 | Path a | -4 | 9 |

Table continued

| Path Number | Path Name | Direction of Arrival (deg) | Path Level |
|---|---|---|---|
| 7 | Path b | -2 | 6 |
| 8 | Path c | 2 | 6 |
| 9 | Path d | 4 | 9 |
| 10 | Path e | 8 | 6 |
| 11 | Path f | 10 | 6 |
| 12 | Path g | 14 | 9 |
| 13 | Path h | 16 | 8 |
| 14 | Path i | 20 | 6 |

In the third path detection example, paths A - D and paths a - i have levels equal to or higher than the path level threshold. Thus, angle spread calculation unit 216 calculates angle spread 217 using the directions of arrival and path levels of these paths. Specifically, angle spread calculation unit 216 substitutes the values in Table 3 for the values in Equation 3 to calculate angle spread 217 of the third path detection example to be 21.64 deg. In the fourth path detection example, on the other hand, paths A - E and paths a - i have levels equal to or higher than the path level threshold. Thus, angle spread calculation unit 216 calculates angle spread 217 using the directions of arrival and path levels of these paths. Specifically, angle spread calculating unit 216 substitutes the values in Table 4 for the values in Equation 3 to calculate angle spread 217 of the fourth path detection example to be 8.07 deg.

Same-path detection angle range calculation unit 218 employs a reference table which selects, for example, 6 deg for same-path detection angle range 219 when angle spread 217 is equal to or more than 10 deg, and selects 2 deg for same-path detection angle range 219 when angle spread 217 is less than 10 deg. When such a reference table is used, same-path detection angle range calculation unit 218 selects 6 deg as same-path detection angle range 219 for the third path detection example, and selects 2 deg as same-path detection angle range 219 for the fourth path detection example.

Therefore, in the third path detection example, finger-assigned path selector unit 220 subsequently regards paths outside of a range of ±6 deg centered at a direction of arrival of a previously selected finger-assigned path as other paths. In the fourth path detection example, in turn, finger-assigned path selector unit 220 subsequently regards paths outside of a range of ±2 deg centered at a direction of arrival of a previously selected finger-assigned path as other paths.

Finger-assigned path selector unit 220 selects finger-assigned paths, from paths equal to or higher than the path level threshold, starting in order from the one having the highest level, and simultaneously excludes all paths within same-path detection angle range 219 centered at each selected path, from candidates for finger-assigned paths, from the next selection onward. In this event, when there are paths at the same level, finger-assigned path selector unit 220 preferentially selects the one which has a smaller direction of arrival.

Specifically, in the third path detection example, finger-assigned path selector unit 220 first selects path A as a finger-assigned path, and simultaneously excludes paths found within a range of ±6 deg centered at path A, from candidates for finger-assigned paths, from the next selection onward, so that paths a - c will never be selected, from the next time onward. Then, finger-assigned path selector unit 220 performs similar processing on path D. By repeating the foregoing sequence, finger-assigned path selector unit 220 selects a total of four paths A - D. In the fourth path detection example, in turn, finger-assigned path selector unit 220 first selects path B as a finger-assigned path, and simultaneously excludes paths found within a range of ±2 deg centered at path B from candidates for finger-assigned paths, from the next selection onward, so that paths b - c will never be selected, from the next time onward. Then, finger-assigned path selector unit 220 performs similar processing on path C. By repeating the foregoing sequence, finger-assigned path selector unit 114 selects a total of five paths A - E.

Correspondingly, in a conventional CDMA receiving apparatus, in which the path detection angle range is uniquely set, for example, to 2 deg when paths A - D have actually arrived in the third path detection example, path c close to path A is erroneously selected as other finger-assigned path. On the other hand, in a conventional CDMA receiving apparatus, in which the path detection angle range is uniquely set, for example, to 6 deg when paths A - E have actually arrived in the fourth path detection example, only paths B, D, and i are selected as other finger-assigned paths because paths A, C, a - d are regarded as the same path as path B, and because paths E, e - h are regarded as the same path as path D, while path i is erroneously selected.

In the second embodiment as described above, same-path detection angle range 219 is adaptively determined with angle spread 217, and paths are selected for assignment to fingers using this same-path detection angle range 219, thereby making it possible to increase the accuracy in the detection of the arrival direction of a received signal and therefore to improve the reception quality of the CDMA receiving apparatus.

In the following, the operation of the CDMA receiving apparatus according to the second embodiment will be described with reference to Fig. 6.

Analog radio signals 201-1 - 201-D received by antennas 200-1 - 200-D are converted to digital baseband signals 203-1 - 203-D respectively by radio receiver 202, and digital baseband signals 203-1 - 203-D are delivered to correlated value calculation unit 204 and demodulation processing unit 224.

Correlated value calculation unit 204 multiplies digital baseband signals 203-1 - 203-D by a known code sequence to calculate correlated values 205-1 - 205-D which are delivered to beam former unit 206. The processing up to this stage is performed independently for each of the antenna elements.

Beam former unit 206 multiplies correlated value 205-1 - 205-D of each antenna element by antenna weights, calculates a sum of the products over antennas, and further converts the resulting sum to power values to calculate two-dimensional profile 207. Two-dimensional profile 207 may be calculated by multiplying antenna weights corresponding to a direction of arrival for each angle resolution by the correlated value to form multiple beams to calculate two-dimensional profile 207, but it does not particularly matter how two-dimensional profile 207 is calculated. Also, a calibration loop may be added to compensate a received signal for variations in phase and amplitude in the receiving apparatus so as to find a calibration coefficient in order to correct the antenna weights, but the calibration processing is not herein particularly taken into consideration.

Path detector unit 208 selects N peaks on two-dimensional profile 207 from the one having the highest level for detection as paths. Path detector unit 208 further delivers N pieces of timing/direction of arrival/level information 209-1 - 209-N each indicative of a path timing, a direction of arrival, and a path level of each of the N detected paths to path level thresholding unit 210.

Path level thresholding unit 210 selects paths having levels equal to or higher than a previously set path level threshold from the N paths detected by path detector unit 208 based on timing/direction of arrival/level information 209-1 - 209-N. The path level threshold in this event may be calculated by multiplying an average value of the two-dimensional profile by a previously set coefficient or by multiplying a maximum path level by a previously set coefficient equal to or less than one, but it does not particularly matter how the path level threshold is set herein.

M pieces of timing/direction of arrival/level information 211-1 - 211-M on the M paths having levels equal to or higher than the path level threshold are delivered from path level thresholding unit 210 to delay spread calculation unit 212 and finger-assigned path selector unit 220.

Delay spread calculation unit 212 substitutes the path timings and path level values of the M paths selected by path level thresholding unit 210 for the values in Equation 1 based on timing/direction of arrival/level information 211-1 - 211-N to calculate delay spread 213 which is then delivered to same-path detection time range calculation unit 214.

Same-path detection time range calculation unit 214 selects same-path detection time range 215 in accordance with delay spread 213 using a previously set reference table, and delivers selected same-path detection time range 215 to finger-assigned path selector unit 220.

Angle spread calculation unit 216 substitutes the direction of arrival and path level value of each of M paths selected by path level thresholding unit 210 for the values in Equation 3 based on timing/direction of arrival/level information 211-1 - 211-M to calculate angle spread 217 which is then delivered to same-path detection angle range calculation unit 218.

Same-path detection angle range calculation unit 218 selects same-path detection angle range 219 in accordance with angle spread 217 using a previously set reference table, and delivers selected same-path detection angle range 219 to finger-assigned path selector unit 220.

Finger-assigned path selector unit 220 selects finger-assigned paths, from the M paths selected by path level thresholding unit 210, starting in order from the one having the highest level based on timing/direction of arrival/level information 211-1 - 211-M, same-path detection time range 215, and same-path detection angle range 219, and simultaneously regards those paths found within same-path detection time range 215 and same-path detection angle range 219 of each selected path as the same paths to exclude these paths from candidates for finger-assigned paths, from the next selection onward. By repeating the foregoing sequence, finger-assigned path selector unit 220 selects K paths as finger-assigned paths. Then, finger-assigned path selector unit 220 delivers K pieces of timing/direction of arrival/level information 221-1 - 221-K on the K paths to finger assignment unit 222. While it is assumed herein that same-path detection time range 215 and same-path detection angle range 219 are individually applied to the finger-assigned path selection, the same-path detection time range and same-path detection angle range may be two-dimensionally determined using both kinds of information.

Finger assignment unit 222 assigns the path timings and directions of arrival of the K finger-assigned paths to J fingers as synchronization timings and arrival directions based on timing/direction of arrival/level information 221-1 - 221-K. In this event, the fingers may be assigned by the following methods. A first method selects paths starting in order from the one having the highest level for assignment when J is less than K due to limitations on the capacity of hardware and the like of the CDMA receiving apparatus. A second method makes (J-K) fingers invalid such that they are not used in RAKE combining when K is less than J. A third method preferentially assigns those paths found in certain ranges of the path timing and direction of arrival of a path assigned to a finger at the preceding time to the same finger as the preceding one. Assume, however, that it does not particularly matter how fingers are assigned. Then, finger assignment unit 222 delivers timing/direction of arrival information 223-1 - 223-J indicative of the path timings and directions of arrival of the paths assigned to the J fingers to demodulation processing unit 224 as synchronization timings and arrival directions of the received signal.

Demodulation processing unit 224 demodulates digital baseband signals 203-1 - 203-D of the received signals associated with the respective antenna elements by performing despreading, beam forming which involves multiplication of the despreaded signals by antenna weights corresponding to directions of arrival and antenna summation, RAKE combining, decoding and the like using timing/direction of arrival information 223-1 - 223-J assigned to the J fingers as synchronization timings and directions of arrival.

While preferred embodiments of the present invention have been described using specific terms, such description is for illustrative purposes only, and it is to be understood that changes and variations may be made without departing from the spirit or scope of the following claims.

**Claims**

1. A CDMA receiving apparatus for demodulating a received signal using path timings of finger-assigned paths assigned to fingers as synchronization timings, said receiver apparatus comprising:

   an antenna;
   calculating means for calculating a delay profile indicative of a correlated power level distribution in a time direction of the signal received by said antenna;
   path detecting means for detecting peaks on the delay profile, calculated by said calculating means, as paths;
   path level thresholding means for determining whether or not a path level of each said path detected by said path detecting means is equal to or higher than a path level threshold;
   delay spread calculating means for calculating a delay spread based on a path timing and path level of each of the paths which are determined to have a level equal to or higher than the path level threshold by said path level thresholding means;
   same-path detection time range calculating means for calculating a same-path detection time range in accordance with the delay spread calculated by said delay spread calculating means;
   finger-assigned path selecting means for selecting finger-assigned paths from paths determined to have a level equal to or higher than the path level threshold by said path level thresholding means starting in order from the path having the highest level, and excluding paths within the same-path detection time range centered at each selected path, from candidates for finger-assigned paths, from the next selection onward; and
   demodulation processing means for demodulating the signal received by said antenna using the path timings of the finger-assigned paths selected by said finger-assigned path selecting means as the synchronization timings.

2. The CDMA receiving apparatus according to claim 1, wherein said delay spread calculating means calculates the delay spread $\sigma \tau$ by the following equations:

$$\sigma_\tau = \sqrt{\frac{1}{\sum\limits_{i=1}^{N} P_i} \cdot \sum_{i=1}^{N} (\tau_i - \tau_{ave})^2 P_i}$$

$$\tau_{ave} = \frac{1}{\sum\limits_{i=1}^{N} P_i} \cdot \sum_{i=1}^{N} \tau_i P_i$$

wherein

N = the number of paths determined to have a level equal to or higher than the path level threshold by said path level thresholding means;

i = path number of each path;

$P_i$ = path level of an i-th path;

$\tau_i$ = path timing of the i-th path; and

$\tau_{ave}$ = average path timing.

3. A CDMA receiving apparatus for demodulating received signals using path timings of finger-assigned paths assigned to fingers as synchronization timings and using directions of arrival of the finger-assigned paths as directions of arrival of the received signals, said receiving apparatus comprising:

a plurality of antennas;

calculating means for calculating a delay profile indicative of a correlated power value distribution in a time direction of the signals received by said plurality of antennas and for calculating an angle profile indicative of a correlated power value distribution in an angle direction of the received signals, and combining the delay profile with the angle profile to calculate a two-dimensional profile;

path detecting means for detecting peaks on the two-dimensional profile calculated by said calculating means as paths;

path level thresholding means for determining whether or not each of the paths detected by said path detecting means has a path level equal to or higher than a path level threshold;

delay spread calculating means for calculating a delay spread based on path timings and path levels of paths which are determined to have a level equal to or higher than the path level threshold by said path level thresholding means;

same-path detection time range calculating means for calculating a same-path detection time range in accordance with the delay spread calculated by said delay spread calculating means;

angle spread calculating means for calculating an angle spread based on directions of arrival and path levels of the paths determined to have a level equal to or higher than the path level threshold by said path level thresholding means;

same-path detection angle range calculating means for calculating a same-path detection angle range in accordance with the angle spread calculated by said angle spread calculating means;

finger-assigned path selecting means for selecting finger-assigned paths from paths determined to have a level equal to or higher than the path level threshold by said path level thresholding means starting in order from the path having the highest level, and excluding paths within the same-path detection time range and the same-path detection angle range centered at each selected path, from candidates for finger-assigned paths, from the next selection onward; and

demodulation processing means for demodulating the signals received by said plurality of antennas using the path timings of the finger-assigned paths selected by said finger-assigned path selecting means as the synchronization timings, and using the directions of arrival of the finger-assigned paths as arrival directions of the received signals.

4. The CDMA receiving apparatus according to claim 3, wherein said delay spread calculating means calculates the delay spread $\sigma_\tau$ by the following equations:

$$\sigma_\tau = \sqrt{\frac{1}{\sum_{i=1}^{N} P_i} \cdot \sum_{i=1}^{N}(\tau_i - \tau_{ave})^2 P_i}$$

$$\tau_{ave} = \frac{1}{\sum_{i=1}^{N} P_i} \cdot \sum_{i=1}^{N} \tau_i P_i$$

wherein

> N = the number of paths determined to have a level equal to or higher than the path level threshold by said path level thresholding means;
> i = path number of each path;
> $P_i$ = path level of an i-th path;
> $\tau_i$ = path timing of the i-th path; and
> $\tau_{ave}$ = average path timing; and

said angle spread calculating means calculates the delay spread $\sigma_\theta$ by the following equations:

$$\sigma_\theta = \sqrt{\frac{1}{\sum\limits_{i=1}^{N} P_i} \cdot \sum_{i=1}^{N} (\theta_i - \theta_{ave})^2 P_i}$$

$$\theta_{ave} = \frac{1}{\sum\limits_{i=1}^{N} P_i} \cdot \sum_{i=1}^{N} \theta_i P_i$$

wherein

> N = the number of paths determined to have a level equal to or higher than the path level threshold by said path level thresholding means;
> i = path number of each path;
> $P_i$ = path level of an i-th path;
> $\theta_i$ = direction of arrival of the i-th path; and
> $\theta_{ave}$ = average direction of arrival of paths.

5. A method of detecting synchronization timings by a CDMA receiving apparatus which demodulates a received signal using path timings of paths assigned to fingers as synchronization timings, said method comprising the steps of:

> (a) calculating a delay profile indicative of a correlated power level distribution in a time direction of the signal received by an antenna;
> (b) detecting peaks on the delay profile as paths;
> (c) determining whether or not a path level of each said path detected as a peak on the delay profile is equal to or higher than a path level threshold;
> (d) calculating a delay spread based on a path timing and path level of each path which is determined to have a level equal to or higher than the path level threshold;
> (e) calculating a same-path detection time range in accordance with the delay spread;
> (f) selecting finger-assigned paths from paths determined to have a level equal to or higher than the path level threshold starting in order from the path having the highest level, and excluding paths within the same-path detection time range centered at each selected path, from candidates for finger-assigned paths, from the next selection onward; and
> (g) using the path timings of the selected finger-assigned paths as the synchronization timings to demodulate the received signal.

6. The synchronization timing detecting method according to claim 5, wherein said step (d) includes calculating the delay spread $\sigma_\tau$ by the following equations:

$$\sigma_\tau = \sqrt{\frac{1}{\sum_{i=1}^{N} P_i} \cdot \sum_{i=1}^{N} (\tau_i - \tau_{ave})^2 P_i}$$

$$\tau_{ave} = \frac{1}{\sum_{i=1}^{N} P_i} \cdot \sum_{i=1}^{N} \tau_i P_i$$

wherein

N = the number of paths determined to have a level equal to or higher than the path level threshold;
i = path number of each path;
$P_i$ = path level of an i-th path;
$\tau_i$ = path timing of the i-th path; and
$\tau_{ave}$ = average path timing.

7. A method of detecting synchronization timings by a CDMA receiving apparatus which demodulates received signals using path timings of finger-assigned paths assigned to fingers as synchronization timings and using directions of arrival of the finger-assigned paths as arrival directions of the received signals, said method comprising the steps of:

(a) calculating a delay profile indicative of a correlated power value distribution in a time direction of the signals received by a plurality of antennas and calculating an angle profile indicative of a correlated power value distribution in an angle direction of the received signals, and combining the delay profile with the angle profile to calculate a two-dimensional profile;
(b) detecting peaks on the two-dimensional profile as paths;
(c) determining whether or not a path level of each said path detected as a peak on the two-dimensional profile is equal to or higher than a path level threshold;
(d) calculating a delay spread based on path timings and path levels of paths which are determined to have a level equal to or higher than the path level threshold;
(e) calculating a same-path detection time range in accordance with the delay spread;
(f) calculating an angle spread based on directions of arrival and path levels of the paths determined to have a level equal to or higher than the path level threshold;
(g) calculating a same-path detection angle range in accordance with the angle spread;
(h) selecting finger-assigned paths from paths determined to have a level equal to or higher than the path level threshold starting in order from the path having the highest level, and excluding paths within the same-path detection time range and the same-path detection angle range centered at each selected path, from candidates for finger-assigned paths, from the next selection onward; and
(i) using the path timings of the finger-assigned paths selected by said finger-assigned path as the synchronization timings, and using the directions of arrival of the finger-assigned paths as arrival directions of the received signals for demodulating the received signals.

8. The synchronization timing detecting method according to claim 7, wherein said step (d) includes calculating the delay spread $\sigma_\tau$ by the following equations:

$$\sigma_\tau = \sqrt{\frac{1}{\sum_{i=1}^{N} P_i} \cdot \sum_{i=1}^{N} (\tau_i - \tau_{ave})^2 P_i}$$

$$\tau_{ave} = \frac{1}{\sum\limits_{i=1}^{N} P_i} \cdot \sum\limits_{i=1}^{N} \tau_i P_i$$

wherein

N = the number of paths determined to have a level equal to or higher than the path level threshold;
i = path number of each path;
$P_i$ = path level of an i-th path;
$\tau_i$ = path timing of the i-th path; and
$\tau_{ave}$ = average path timing; and

said step (f) includes calculating the delay spread $\sigma_\theta$ by the following equations:

$$\sigma_\theta = \sqrt{\frac{1}{\sum\limits_{i=1}^{N} P_i} \cdot \sum\limits_{i=1}^{N} (\theta_i - \theta_{ave})^2 P_i}$$

$$\theta_{ave} = \frac{1}{\sum\limits_{i=1}^{N} P_i} \cdot \sum\limits_{i=1}^{N} \theta_i P_i$$

wherein

N = the number of paths determined to have a level equal to or higher than the path level threshold;
i = path number of each path;
$P_i$ = path level of an i-th path;
$\theta_i$ = direction of arrival of the i-th path; and
$\theta_{ave}$ = average direction of arrival of paths.

Fig. 1 (Prior Art)

Fig. 2 (Prior Art)

Fig. 3

Fig. 4

path
level

path level
threshold

a A b c    d e B f    g h C i    D j

time direction
(0.25 chip resolution)

±0.75
chip

±0.75
chip

±0.75
chip

±0.75
chip

EP 1 617 565 A1

Fig. 5

Fig. 6

EP 1 617 565 A1

Fig. 7

EP 1 617 565 A1

Fig. 8

**European Patent Office**

**EUROPEAN SEARCH REPORT**

Application Number

EP 05 01 5359

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 365 521 A (NEC CORPORATION) 26 November 2003 (2003-11-26) * abstract; figures 1,5,6,8 * * paragraphs [0018] - [0024], [0034] - [0037] * | 1-8 | H04B1/707 H04B7/08 |
| A | EP 1 361 678 A (MATSUSHITA ELECTRIC INDUSTRIAL CO., LTD) 12 November 2003 (2003-11-12) * abstract; figures 3-7 * * paragraphs [0011] - [0034] * | 1-8 | |
| P,A | EP 1 469 685 A (HUAWEI TECHNOLOGIES CO., LTD) 20 October 2004 (2004-10-20) * abstract * | 2,4,6,8 | |
| A | & DATABASE WPI Derwent Publications Ltd., London, GB; AN 2003-577485 * abstract * | | |

**TECHNICAL FIELDS SEARCHED** (Int.Cl.7)

H04B

The present search report has been drawn up for all claims

| Place of search | Date of completion of the search | Examiner |
|---|---|---|
| Munich | 20 October 2005 | Galli, P |

## ANNEX TO THE EUROPEAN SEARCH REPORT
## ON EUROPEAN PATENT APPLICATION NO.

EP 05 01 5359

This annex lists the patent family members relating to the patent documents cited in  the above-mentioned European search report.
The members are as contained in the European Patent Office EDP file on
The European Patent Office is in no way liable for these particulars which are merely  given for the purpose of information.

20-10-2005

| Patent document cited in search report | | Publication date | Patent family member(s) | | Publication date |
|---|---|---|---|---|---|
| EP 1365521 | A | 26-11-2003 | CN | 1462123 A | 17-12-2003 |
| | | | JP | 2003338776 A | 28-11-2003 |
| | | | US | 2003220082 A1 | 27-11-2003 |
| EP 1361678 | A | 12-11-2003 | CN | 1452425 A | 29-10-2003 |
| | | | JP | 2004007338 A | 08-01-2004 |
| | | | US | 2003228887 A1 | 11-12-2003 |
| EP 1469685 | A | 20-10-2004 | AU | 2002240779 A1 | 15-07-2003 |
| | | | WO | 03056849 A1 | 10-07-2003 |
| | | | CN | 1430367 A | 16-07-2003 |
| | | | US | 2005124368 A1 | 09-06-2005 |

EPO FORM P0459

For more details about this annex : see Official Journal of the European Patent Office, No. 12/82